# FASCICULE DE BREVET EUROPEEN

(11) **EP 3 175 527 B1**
(45) Date de publication et mention de la délivrance du brevet: **06.06.2018**
(21) Numéro de dépôt: 15739289.5
(22) Date de dépôt: 20.07.2015
(51) Int. Cl.: H02J 1/00

(54) **SYSTEME D'ALIMENTATION ELECTRIQUE EN COURANT CONTINU HAUTE TENSION D'UN AERONEF**
HOCHSPANNUNGSGLEICHSTROM-ENERGIEVERSORGUNGSSYSTEM FÜR FLUGZEUG
HIGH-VOLTAGE DIRECT CURRENT POWER SUPPLY SYSTEM FOR AN AIRCRAFT

(30) Priorité: 31.07.2014 FR 1457474
(43) Date de publication de la demande: 07.06.2017
(73) Titulaire: Safran Electronics & Defense, 92100 Boulogne-Billancourt (FR)
(72) Inventeur: GUILLOT, François, F-92100 Boulogne-Billancourt (FR)
(74) Mandataire: Decorchemont, Audrey Véronique Christèle
(86) Numéro de dépôt international: PCT/EP2015/066586
(87) Numéro de publication internationale: WO 2016/016041

(56) Documents cités:
- EP-A2- 2 015 420
- EP-A2- 2 654 154
- US-A- 5 612 579
- US-A- 5 899 411

## Description

L'invention concerne un système d'alimentation électrique en courant continu haute tension d'un aéronef.

### ARRIERE-PLAN TECHNOLOGIQUE DE L'INVENTION

Dans un souci de diminution de la consommation en carburant d'un aéronef, il est de plus en plus souvent envisagé de remplacer les dispositifs traditionnels fonctionnant par énergie hydraulique ou énergie pneumatique par de nouveaux dispositifs fonctionnant par énergie électrique.

Avec un aéronef fonctionnant principalement à l'énergie électrique, de nombreux dispositifs doivent pouvoir accéder au système d'alimentation électrique dudit aéronef.

### OBJET DE L'INVENTION

Un but de l'invention est de proposer un système d'alimentation électrique en courant continu haute tension d'un aéronef ayant une très bonne disponibilité.

### BREVE DESCRIPTION DE L'INVENTION

En vue de la réalisation de ce but, on propose un système d'alimentation électrique en courant continu haute tension d'un aéronef comprenant au moins :
- un premier réseau d'alimentation électrique comprenant un premier alternateur,
- un deuxième réseau d'alimentation électrique comprenant un deuxième alternateur,
- des lignes secondaires pour l'alimentation électrique d'éléments de l'aéronef, les lignes secondaires étant réunies en au moins un premier groupe de sorte à être reliées via des commutateurs à une même première ligne intermédiaire et en au moins un deuxième groupe de sorte à être reliées via des commutateurs à une même deuxième ligne intermédiaire,
le système comprenant un organe de commande des réseaux d'alimentation électrique, l'organe de commande étant agencé pour asservir en courant chacun des alternateurs, le système étant agencé de sorte que des sorties d'alimentation des deux réseaux d'alimentation électrique soient reliées entre elles avant d'être raccordées à chaque ligne intermédiaire, chaque ligne intermédiaire étant ainsi alimentée par les deux réseaux d'alimentation électrique et les deux lignes intermédiaires étant alimentées en parallèle.

Grâce à l'asservissement en courant des différents alternateurs, les alternateurs peuvent alimenter en parallèle chaque ligne intermédiaire et donc chaque groupe de lignes secondaires.

Il s'avère ainsi possible pour l'organe de commande de définir une consigne de commande en courant à destination de chacun des réseaux de sorte que chaque réseau fournisse en sortie une puissance électrique qui est fonction des besoins des différents groupes de lignes secondaires et des disponibilités de chaque réseau qui peuvent varier par exemple en fonction de l'état opérationnel des réseaux ou encore des paramètres de vol.

Le système d'alimentation électrique selon l'invention dans son ensemble présente donc une bonne disponibilité puisque l'organe de commande joue sur la présence de plusieurs réseaux et sur la mise en parallèle desdits réseaux pour assurer une fourniture de puissance électrique adéquate aux lignes secondaires même si la disponibilité propre de chaque réseau varie.

De façon avantageuse, il s'avère possible de modifier de façon progressive la répartition de fourniture de puissance électrique par chacun des réseaux aux lignes secondaires. Ceci permet d'éviter des sauts et des perturbations du système d'alimentation électrique.

En outre, il s'avère avantageux d'asservir en courant les alternateurs car les alternateurs travaillent naturellement en courant.

Par ailleurs, le taux de défaillance du système d'alimentation selon l'invention est faible puisque chaque groupe de lignes secondaires est relié à chacun des réseaux disponibles.

En outre, le système d'alimentation selon l'invention permet de minimiser les bruits générés par les réseaux.

### BREVE DESCRIPTION DES DESSINS

L'invention sera mieux comprise à la lumière de la description qui suit d'un mode de réalisation particulier non limitatif de l'invention. Il sera fait référence aux figures ci-jointes, parmi lesquelles :
- la figure 1 est un schéma illustrant le système d'alimentation électrique selon l'invention,

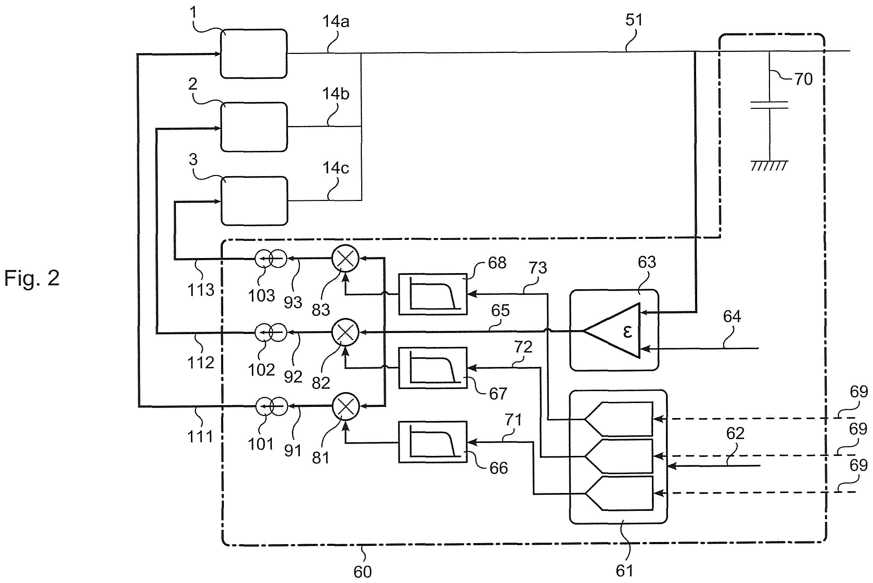

- la figure 2 est un schéma illustrant plus en détails une partie du système illustré à la figure 1.

### DESCRIPTION DETAILLEE DE L'INVENTION

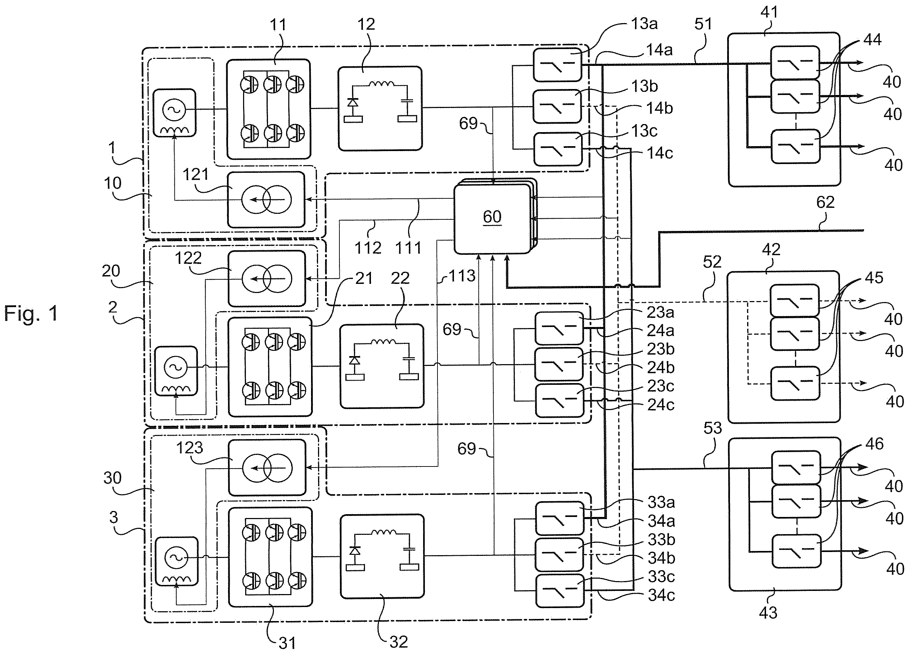

En référence à la figure 1, le système d'alimentation électrique en courant continu haute tension d'un aéronef selon l'invention comprend ici :
- un premier réseau 1 d'alimentation électrique comprenant un premier alternateur 10,
- un deuxième réseau 2 d'alimentation électrique comprenant un deuxième alternateur 20,
- un troisième réseau 3 d'alimentation électrique comprenant un troisième alternateur 30.

Typiquement, le premier alternateur 10 est associé à un premier moteur principal de l'aéronef (non illustré ici), le premier alternateur 10 convertissant l'énergie mécanique fournit par le premier moteur principal en énergie électrique alternative. Le deuxième alternateur 20 est associé à un deuxième moteur principal de l'aéronef (non illustré ici), le deuxième alternateur 20 convertissant l'énergie mécanique fournit par le deuxième moteur principal en énergie électrique alternative. Enfin, le troisième alternateur 30 est associé à un moteur auxiliaire de puissance de l'aéronef (non illustré ici), le troisième alternateur 30 convertissant l'énergie mécanique fournit par le moteur auxiliaire de puissance en énergie électrique alternative. Les trois alternateurs 10, 20, 30 ne sont pas ici des alternateurs à aimants permanents mais à électroaimants. Plus précisément, les trois alternateurs 10, 20, 30 sont des alternateurs triphasés à induction contrôlée.

Le premier réseau 1 d'alimentation électrique comporte donc le premier alternateur 10 raccordé à un premier redresseur 11. La sortie du premier redresseur 11 est elle-même raccordée à un premier filtre passe-bas 12. La sortie du premier filtre passe-bas 12 est raccordée en parallèle à trois commutateurs 13a, 13b, 13c définissant chacun une première sortie 14a du premier réseau 1, une deuxième sortie 14b du premier réseau 1 et une troisième sortie 14c du premier réseau 1.

De même, le deuxième réseau 2 d'alimentation électrique comporte le deuxième alternateur 20 raccordé à un deuxième redresseur 21. La sortie du deuxième redresseur 21 est elle-même raccordée à un deuxième filtre passe-bas 22. La sortie du deuxième filtre passe-bas 22 est raccordée en parallèle à trois commutateurs 23a, 23b, 23c définissant chacun une première sortie 24a du deuxième réseau 2, une deuxième sortie 24b du deuxième réseau 2 et une troisième sortie 24c du deuxième réseau 2.

Enfin, le troisième réseau 3 d'alimentation électrique comporte le troisième alternateur 30 raccordé à un troisième redresseur 31. La sortie du troisième redresseur 31 est elle-même raccordée à un troisième filtre passe-bas 32. La sortie du troisième filtre passe-bas 32 est raccordée en parallèle à trois commutateurs 33a, 33b, 33c définissant chacun une première sortie 34a du troisième réseau 3, une deuxième sortie 34b du troisième réseau et une troisième sortie 34c du troisième réseau.

Par ailleurs, le système d'alimentation électrique comporte une pluralité de lignes secondaires 40 pour l'alimentation électrique de différents éléments de l'aéronef. Les lignes secondaires sont ici réunies en :
- un premier groupe 41 de sorte que chaque ligne secondaire 40 dudit groupe soit connectée de façon parallèle via un commutateur 44 associé à une même première ligne intermédiaire 51,
- un deuxième groupe 52 de sorte que chaque ligne secondaire 40 dudit groupe soit connectée de façon parallèle via un commutateur 45 associé à une même deuxième ligne intermédiaire 52,
- un troisième groupe 53 de sorte que chaque ligne secondaire 40 dudit groupe soit connectée de façon parallèle via un commutateur 46 associé à une même troisième ligne intermédiaire 53.

Le système est en outre agencé de sorte que la première sortie 14a du premier réseau d'alimentation électrique 1, la première sortie 24a du deuxième réseau 2 d'alimentation électrique et la première sortie 34a du troisième réseau 3 d'alimentation électrique soient reliées entre elles avant d'être connectées à la première ligne intermédiaire 51. Du fait que les trois premières sorties 14a, 24a, 34a soient reliées entre elles, la tension aux bornes de la première ligne intermédiaire 51 est une tension HVDC (pour High Voltage Direct Current en anglais c'est-à-dire Courant Continu Haute Tension).

De même le système est agencé de sorte que la deuxième sortie 14b du premier réseau 1 d'alimentation électrique, la deuxième sortie 24b du deuxième réseau 2 d'alimentation électrique et la deuxième sortie 34b du troisième réseau 3 d'alimentation électrique soient reliées entre elles avant d'être toutes connectées à la deuxième ligne intermédiaire 52. La tension aux bornes de la deuxième ligne intermédiaire 52 est une tension HVDC.

En outre le système est agencé de sorte que la troisième sortie 14c du premier réseau 1 d'alimentation électrique, la troisième sortie 24c du deuxième réseau 2 d'alimentation électrique et la troisième sortie 34c du troisième réseau 3 d'alimentation électrique soient reliées entre elles avant d'être toutes connectées à la troisième ligne intermédiaire 53. La tension aux bornes de la troisième ligne intermédiaire 53 est une tension HVDC.

Ainsi, chaque ligne intermédiaire 51, 52, 53 est alimentée par les trois réseaux 1, 2, 3 d'alimentation électrique. En outre, les trois lignes intermédiaires 51, 52, 53 sont alimentées en parallèle par lesdits réseaux 1, 2, 3 d'alimentation électrique. Les commutateurs 44, 45, 46 des différents groupes 41, 42, 43 de lignes secondaires permettent ensuite de redistribuer la puissance électrique aux différents éléments.

Le système comporte également un organe de commande 60 des trois réseaux 1, 2, 3 d'alimentation électrique. L'organe de commande 60 est ainsi agencé pour asservir en courant chacun des trois alternateurs 10, 11, 12. Cet asservissement en courant permet d'agencer très facilement les trois alternateurs 10, 11, 12, et donc les trois réseaux 1, 2, 3, en parallèle.

L'organe de commande 60 comporte ainsi des moyens de réception 61 d'une consigne de répartition 62 de la puissance électrique à fournir aux lignes intermédiaires 51, 52, 53 par chaque réseau d'alimentation électrique 1, 2, 3. La consigne de répartition 62 est par exemple transmise par un ordinateur de bord de l'aéronef. Les moyens de réception 61 sont configurés pour découpler la consigne de répartition 62 en :
- une première consigne 71 pour le premier réseau 1 d'alimentation électrique,
- une deuxième consigne 72 pour le deuxième réseau 2 d'alimentation électrique, et
- une troisième consigne 73 pour le troisième réseau 3 d'alimentation électrique.

Les moyens de réception 61 sont configurés de sorte que la première consigne 71, la deuxième consigne 72 et la troisième consigne 73 se présentent toutes sous la forme d'un pourcentage (variant de 0 à 100%) correspondant à la puissance électrique que doit fournir le réseau d'alimentation électrique correspondant aux différentes lignes intermédiaires 51, 52, 53 et de sorte que la somme de la première consigne 71, de la deuxième consigne 72 et de la troisième consigne 73 soit toujours de 100%.

L'organe de commande comporte des moyens de mesure des tensions électriques aux bornes des trois lignes intermédiaires 51, 52, 53. Les tensions aux bornes des différentes lignes intermédiaires 51, 52, 53 sont identiques et égales à la tension HVDC et la prise de mesure multiple existe donc pour des questions de redondances.

L'organe de commande 60 comporte des moyens de comparaison 63 de la tension mesurée aux bornes de l'une des lignes intermédiaires 51, 52, 53, par exemple au borne de la première ligne intermédiaire, à une tension seuil de référence 64. Les moyens de comparaison 63 amplifient l'erreur entre la tension mesurée et la tension de référence 64 et fournissent une erreur amplifiée 65 à l'entrée d'un premier multiplicateur 81 de l'organe de commande 60, à l'entrée d'un deuxième multiplicateur 82 de l'organe de commande 60 et à l'entrée d'un troisième multiplicateur 83 de l'organe de commande 60.

Le premier multiplicateur 81 multiplie ladite erreur amplifiée 65 par la première consigne 71, après passage de la première consigne 71 par un filtre passe-bas 66 de l'organe de commande 60, pour générer une première consigne de commande en tension 91 pour le premier réseau 1 d'alimentation électrique. L'organe de commande 60 comporte en outre un premier convertisseur tension/courant 101 raccordé au premier multiplicateur 81 de sorte à transformer ladite première consigne de commande en tension 91 en une première consigne de commande en courant 111 qui est directement transmise au premier alternateur 10. Plus précisément, la première consigne de commande en courant 111 est transmise au générateur d'alimentation 121 de l'enroulement d'excitation du premier alternateur 10.

De même, le deuxième multiplicateur 82 multiplie ladite erreur amplifiée 65 par la deuxième consigne 72, après passage de la deuxième consigne 72 par un filtre passe-bas 67 de l'organe de commande 60, pour générer une deuxième consigne de commande en tension 92 pour le deuxième réseau 2 d'alimentation électrique. L'organe de commande 60 comporte en outre un deuxième convertisseur tension/courant 102 raccordé au deuxième multiplicateur 82 de sorte à transformer ladite deuxième consigne de commande en tension 92 en une deuxième consigne de commande en courant 112 qui est directement transmise au deuxième alternateur 20. Plus précisément, la deuxième consigne de commande en courant 112 est transmise au générateur d'alimentation 122 de l'enroulement d'excitation du deuxième alternateur 20.

Pareillement, le troisième multiplicateur 83 multiplie ladite erreur amplifiée 65 par la troisième consigne 73, après passage de la troisième consigne 73 par un filtre passe-bas 68 de l'organe de commande, pour générer une troisième consigne de commande en tension 93 pour le troisième réseau 3 d'alimentation électrique. L'organe de commande 60 comporte en outre un troisième convertisseur tension/courant 103 raccordé au troisième multiplicateur 83 de sorte à transformer ladite troisième consigne de commande en tension 93 en une troisième consigne de commande en courant 113 qui est directement transmise au troisième alternateur 30. Plus précisément, la troisième consigne de commande en courant 113 est transmise au générateur d'alimentation 123 de l'enroulement d'excitation du troisième alternateur 30.

De la sorte, en fonction de la consigne de répartition 62 et de la mesure de tension, l'organe de commande 60 permet de générer des consignes de commande en courant 111, 112, 113 à destination de chacun des alternateurs 10, 20, 30 des trois réseaux 1, 2, 3 d'alimentation électrique. L'organe de commande 60 met ainsi en oeuvre une boucle d'asservissement ayant pour entrées la consigne de répartition 64 et la tension mesurée et ayant pour sorties les trois consignes de commande en courant 111, 112, 113.

Par ailleurs, le filtrage par un filtre passe-bas 66, 67, 68 de la première consigne 71, de la deuxième consigne 72 et de la troisième consigne 73 permet d'éviter que des modifications de ces consignes induisent des perturbations dans la boucle d'asservissement décrite.

En outre, faire fonctionner en courant les alternateurs 10, 20, 30 permet de s'affranchir des problèmes de dérive de caractéristiques des enroulements d'excitation desdits alternateurs 10, 20, 30.

De préférence, l'organe de commande 60 comporte des moyens de détection d'une surtension dans chacun des réseaux d'alimentation électrique 1, 2, 3 qui fournissent des indications 69 d'une éventuelle surtension dans les différents réseaux 1, 2, 3 à l'organe de commande 60.

L'organe de commande 60 peut ainsi adapter les différentes consignes 71, 72, 73 pour éviter que la surtension ne perdure dans l'un des réseaux 1, 2, 3 associé.

De préférence, l'organe de commande 60 comporte un condensateur 70 dont la tension à ses bornes est la tension HVDC, le condensateur 70 étant agencé en entrée de l'organe de commande 60. Le condensateur 70 a pour rôle d'aider à la stabilité de ladite tension HVDC lors de transitoires de courant et également d'aider à la stabilité de la boucle d'asservissement décrite.

De préférence, l'organe de commande 60 asservit en courant les trois alternateurs 10, 20, 30 de sorte que ce soit le premier réseau 1 et le deuxième réseau 2, c'est-à-dire les réseaux associés aux moteurs principaux, qui fournissent en priorité la puissance électrique aux différentes lignes intermédiaires 51, 52, 53, le troisième réseau 3 jouant le rôle de variable d'ajustement lorsque le premier réseau 1 et le deuxième réseau 2 ne peuvent fournir seuls la puissance électrique aux différentes lignes intermédiaires 51, 52, 53.

Ainsi, grâce à l'invention, l'organe de commande 60 met en oeuvre un asservissement permettant de répartir la fourniture de puissance électrique par chacun des réseaux 1, 2, 3 de façon dynamique en fonction notamment de la disponibilité de chaque réseau 1, 2, 3.

Grâce aux trois réseaux 1, 2, 3 distincts et aux différents commutateurs 13a, 13b, 13c, 23a, 23b, 23c, 33a, 33b, 33c il est possible de choisir quels réseaux d'alimentation électrique 1, 2, 3 peuvent alimenter chaque groupe 41, 42, 43 de lignes secondaires et dans quelles proportions. On préfère toutefois avoir recours à la modification progressive de la puissance délivrée par chacun des réseaux 1, 2, 3 aux lignes intermédiaires 51, 52, 53 par l'intermédiaire de l'organe de commande 60 à une ouverture d'un ou plusieurs commutateurs 13a, 13b, 13c, 23a, 23b, 23c, 33a, 33b, 33c afin d'éviter d'engendrer des perturbations dans le système.

Bien entendu l'invention n'est pas limitée au mode de réalisation décrit et on peut y apporter des variantes de réalisation sans sortir du cadre de l'invention tel que défini par les revendications.

En particulier, bien qu'ici le système d'alimentation comporte trois réseaux d'alimentation électrique comprenant chacun un alternateur, le système d'alimentation électrique pourra comporter un nombre différent d'alternateurs à condition d'en comporter au moins deux.

## Revendications

1. Système d'alimentation électrique en courant continu haute tension d'un aéronef comprenant au moins :
- un premier réseau (1) d'alimentation électrique comprenant un premier alternateur (10),
- un deuxième réseau (2) d'alimentation électrique comprenant un deuxième alternateur (20),
- des lignes secondaires (40) pour l'alimentation électrique d'éléments de l'aéronef,
le système étant **caractérisé en ce que** les lignes secondaires sont réunies en au moins un premier groupe (41) de sorte à être reliées via des commutateurs (44) à une même première ligne intermédiaire (51) et en au moins un deuxième groupe (42) de sorte à être reliées via des commutateurs (45) à une même deuxième ligne intermédiaire (52),
et **en ce que** le système comprend un organe de commande (60) des réseaux d'alimentation électrique, l'organe de commande étant agencé pour asservir en courant chacun des alternateurs, le système étant agencé de sorte que des premières sorties d'alimentation des deux réseaux d'alimentation électrique soient reliées entre elles avant d'être raccordées à la première ligne intermédiaire et de sorte que des deuxièmes sorties d'alimentation des deux réseaux d'alimentation électrique, distinctes des premières sorties, soient reliées entre elles avant d'être raccordés à la deuxième ligne intermédiaire, chaque ligne intermédiaire étant ainsi alimentée par les deux réseaux d'alimentation électrique et les deux lignes intermédiaires étant alimentées en parallèle.

2. Système selon la revendication 1, dans lequel l'organe de commande (60) comporte des moyens de réception (61) d'une consigne de répartition de la puissance électrique à fournir aux lignes intermédiaires par chaque réseau d'alimentation électrique et d'une mesure de tension électrique aux bornes d'au moins l'une des lignes intermédiaires, l'organe de commande étant apte à générer des consignes de commande en courant (111, 112) à destination de chacun des alternateurs en fonction de ladite consigne de répartition et de ladite mesure de tension.

3. Système selon la revendication 2, dans lequel l'organe de commande (60) comporte en outre des moyens de détection d'une surtension dans chacun des réseaux d'alimentation électrique en communication avec l'organe de commande (60).

4. Système selon la revendication 2, dans lequel les moyens de réception (61) découplent la consigne de répartition (62) en une première consigne pour le premier réseau (71) et en une deuxième consigne pour le deuxième réseau (72).

5. Système selon la revendication 4, dans lequel l'organe de commande (60) comporte deux multiplicateurs, le premier multiplicateur (81) étant configuré pour multiplier la première consigne par une erreur entre la tension mesurée et une tension seuil et le deuxième multiplicateur (82) étant configuré pour multiplier la deuxième consigne par ladite erreur entre la tension mesurée et une tension de référence.

6. Système de commande selon la revendication 5, dans lequel l'organe de commande (60) comporte un premier convertisseur tension/courant (101) associé à la sortie du premier multiplicateur et un deuxième convertisseur tension/courant (102) associé à la sortie du deuxième multiplicateur.

7. Système selon la revendication 1, dans lequel chaque réseau principal (1, 2) d'alimentation électrique comprend l'alternateur (10, 20) associé, un redresseur (11, 21) raccordé à l'alternateur, un filtre passe-bas (12, 22) raccordé au redresseur et au moins deux commutateurs raccordés en parallèle au convertisseur, les sorties des commutateurs étant raccordées respectivement à l'une des lignes intermédiaires.

8. Système selon la revendication 1, dans lequel l'un des alternateurs (30) est associé à un moteur auxiliaire de puissance de l'aéronef.

9. Système selon la revendication 1, comprenant trois réseaux d'alimentation électrique (1, 2, 3) comprenant chacun un alternateur (10, 20, 30), les lignes secondaires étant réunies en trois groupes (41, 42, 43) connectés chacun à une même ligne intermédiaire via des commutateurs, le système étant agencé de sorte que chaque ligne intermédiaire soit alimentée en parallèle par chacun des trois réseaux d'alimentation électrique.

## Patentansprüche

1. Elektrisches Versorgungssystem zur Versorgung eines Luftfahrzeugs mit Gleichstrom hoher Spannung, wobei das System mindestens umfasst:
- ein erstes elektrisches Versorgungsnetz (1), das einen ersten Wechselstromgenerator (10) umfasst,
- ein zweites elektrisches Versorgungsnetz (2), das einen zweiten Wechselstromgenerator (20) umfasst,
- Sekundärleitungen (40) für die elektrische Versorgung von Elementen des Luftfahrzeugs,
wobei das System **dadurch gekennzeichnet ist, dass** die Sekundärleitungen in mindestens einer ersten Gruppe (41) zusammengefasst sind, um über Schalter (44) mit einer gleichen ersten Zwischenleitung (51) verbunden zu werden, sowie in mindestens einer zweiten Gruppe (42), um über Schalter (45) mit einer gleichen zweiten Zwischenleitung (52) verbunden zu werden,
und dass das System ein Steuerorgan (60) zum Steuern der elektrischen Versorgungsnetze umfasst, wobei das Steuerorgan ausgebildet ist, um an jedem der Wechselstromgeneratoren eine Stromsteuerung durchzuführen, wobei das System derart ausgebildet ist, dass die ersten Versorgungsausgänge der beiden elektrischen Versorgungsnetze miteinander verbunden werden, bevor sie mit der ersten Zwischenleitung verbunden werden, und derart, dass die zweiten Versorgungsausgänge der beiden elektrischen Versorgungsnetze, die von den ersten Ausgängen verschieden sind, miteinander verbunden werden, bevor sie mit der zweiten Zwischenleitung verbunden werden, wobei jede Zwischenleitung somit von den beiden elektrischen Versorgungsnetzen versorgt wird und die beiden Zwischenleitungen parallel versorgt werden.

2. System nach Anspruch 1, bei dem das Steuerorgan (60) Empfangsmittel (61) zum Empfangen eines Verteilungssollwertes für die elektrische Leistung umfasst, die den Zwischenleitungen von jedem elektrischen Versorgungsnetz geliefert werden soll, und zum Empfangen einer Messung der elektrischen Spannung an den Anschlussklemmen mindestens einer der Zwischenleitungen, wobei das Steuerorgan dazu geeignet ist, Stromsteuersollwerte (111, 112) für jeden der Wechselstromgeneratoren in Abhängigkeit von dem genannten Verteilungssollwert und der genannten Spannungsmessung zu erzeugen.

3. System nach Anspruch 2, bei dem das Steuerorgan (60) ferner Mittel zum Erfassen einer Überspannung in jedem der elektrischen Versorgungsnetze in Kommunikation mit dem Steuerorgan (60) umfasst.

4. System nach Anspruch 2, bei dem die Empfangsmittel (61) den Verteilungssollwert (62) in einen ersten Sollwert für das erste Netz (71) und in einen zweiten Sollwert für das zweite Netz (72) entkoppeln.

5. System nach Anspruch 4, bei dem das Steuerorgan (60) zwei Multiplikatoren umfasst, wobei der erste Multiplikator (81) konfiguriert ist, um den ersten Sollwert mit einem Fehler zwischen der gemessenen Spannung und einer Schwellwertspannung zu multiplizieren, und der zweite Multiplikator (82) konfiguriert ist, um den zweiten Sollwert mit dem genannten Fehler zwischen der gemessenen Spannung und einer Referenzspannung zu multiplizieren.

6. Steuersystem nach Anspruch 5, bei dem das Steuerorgan (60) einen ersten Spannungs-Strom-Wandler (101) umfasst, der mit dem Ausgang des ersten Multiplikators verbunden ist, sowie einen zweiten Spannungs-Strom-Wandler (102), der mit dem Ausgang des zweiten Multiplikators verbunden ist.

7. System nach Anspruch 1, bei dem jedes elektrische Versorgungshauptnetz(1, 2) einen dazugehörigen Wechselstromgenerator (10, 20), einen Gleichrichter (11, 21), der mit dem Wechselstromgenerator verbunden ist, ein Tiefpassfilter (12, 22), das an den Gleichrichter angeschlossen ist, und mindestens zwei Schalter umfasst, die parallel zum Wandler geschaltet sind, wobei die Ausgänge der Schalter jeweils mit einer der Zwischenleitungen verbunden sind.

8. System nach Anspruch 1, bei dem einer der Wechselstromgeneratoren (30) mit einem Hilfsleistungsmotor des Luftfahrzeugs verbunden ist.

9. System nach Anspruch 1, umfassend drei elektrische Versorgungsnetze (1, 2, 3), die jeweils einen Wechselstromgenerator (10, 20, 30) umfassen, wobei die Sekundärleitungen in drei Gruppen (41, 42, 43) zusammengefasst sind, die jeweils über Schalter mit einer gleichen Zwischenleitung verbunden sind, wobei das System so ausgebildet ist, dass jede Zwischenleitung parallel von jedem der drei elektrischen Versorgungsnetze versorgt wird.

## Claims

1. A high voltage direct current (HVDC) electrical power supply system for an aircraft, the system comprising at least:
• a first electrical power supply network (1) including a first alternator (10);
• a second electrical power supply network (2) including a second alternator (20); and
• secondary lines (40) for electrically powering elements of the aircraft,
the system being **characterized in that** the secondary lines are united in at least a first group (41) so as to be connected via switches (44) to a common first intermediate line (51), and in at least a second group (42) so as to be connected via switches (45) to a common second intermediate line (52);
and **in that** the system includes a control member (60) for controlling the electrical power supply networks, the control member being arranged to servo-control each of the alternators in current, the system being arranged in such a manner that the first power supply outputs of the two electrical power supply networks are connected together prior to being connected to the first intermediate line and so that second power supply outputs of the two electrical power supply networks, distinct from the first outputs, are connected together prior to being connected to the second intermediate line, each intermediate line thus being powered by the two electrical power supply networks and the two intermediate lines being powered in parallel.

2. A system according to claim 1, wherein the control member (60) includes reception means (61) for receiving a distribution setpoint for the electrical power to be supplied to the intermediate line by each electrical power supply network and for receiving a measurement of voltage across the terminals of at least one of the intermediate lines, the control member being suitable for generating current control setpoints (111, 112) for each of the alternators as a function of said distribution setpoints and of said voltage measurement.

3. A system according to claim 2, wherein the control member (60) also includes detector means for detecting excess voltage in each of the electrical power supply networks and in communication with the control member (60) .

4. A system according to claim 2, wherein the reception means (61) decouple the distribution setpoint (62) into a first setpoint for the first network (71) and a second setpoint for the second network (72) .

5. A system according to claim 4, wherein the control member (60) has two multipliers, the first multiplier (81) being configured to multiply the first setpoint by an error between the measured voltage and a threshold voltage, and the second multiplier (82) being configured to multiply the second setpoint by said error between the measured voltage and a reference voltage.

6. A control system according to claim 5, wherein the control member (60) includes a first voltage-to-current converter (101) associated with the output from the first multiplier, and a second voltage-to-current converter (102) associated with the output of the second multiplier.

7. A system according to claim 1, wherein each main electrical power supply network (1, 2) comprises the associated alternator (10, 20), a rectifier (11, 21) connected to the alternator, a lowpass filter (12, 22) connected to the rectifier, and at least two switches connected in parallel to the converter, the outputs from the switches being connected to respective ones of the intermediate lines.

8. A system according to claim 1, wherein one of the alternators (30) is associated with an auxiliary power unit of the aircraft.

9. A system according to claim 1, having three electrical power supply networks (1, 2, 3), each having an alternator (10, 20, 30), the secondary lines being united in three groups (41, 42, 43), each connected to a common intermediate line via switches, the system being arranged in such a manner that each intermediate line is powered in parallel by each of the three electrical power supply networks.
